# EUROPÄISCHE PATENTANMELDUNG

(11) **EP 2 930 652 A1**
(43) Veröffentlichungstag der Anmeldung: **14.10.2015**
(21) Anmeldenummer: 14163985.6
(22) Anmeldetag: 09.04.2014
(51) Int. Cl.: G06K 9/00, G06T 7/00

(54) **Verfahren zur thermischen Überwachung von Objekten**

(71) Anmelder: Siemens AG Österreich, 1210 Wien (AT)
(72) Erfinder: Birchbauer, Josef Alois, 8054 Seiersberg (AT); Hatzl, Jürgen, 7423 Grafenschachen (AT); Kluckner, Stefan, 6063 Rum (AT); Windisch, Claudia, 8565 St. Johann (AT)
(74) Vertreter: Maier, Daniel Oliver

(57) **Zusammenfassung**

Die Erfindung betrifft ein Verfahren zur thermischen Überwachung von dreidimensionalen Objekten wie z.B. Industrie- oder Kraftwerksanlagen oder Anlageteilen bzw. -komponenten. Bei dem erfindungsgemäßen Verfahren wird zuerst ein dreidimensionales Modell eines zu überwachenden Objektes erfasst (2). Dann werden im dreidimensionalen Modell Messpunkte mit zugehörigen thermischen Sollwerten annotiert (3) und es werden Überwachungszeitpunkte mit zugehörigen Überwachungsabläufen festgelegt (4). Zum jeweiligen Überwachungszeitpunkt wird dann der entsprechende, zugehörige Überwachungsablauf aufgerufen und es werden an im Überwachungsablauf festgelegten Messpositionen zweidimensionale Thermalbilder der Messpunkte von einer Überwachungsvorrichtung aufgenommen (5), wobei die Thermalbilder Wärmebilddaten und zweidimensionale Informationsdaten im visuellen Spektrum der jeweils aufgenommen Messpunkte bzw. Objektausschnitte umfassen. Die aufgenommenen Thermalbilder werden durch die Überwachungsvorrichtung an eine zentrale Auswerteeinrichtung weitergeleitet (6). Mit Hilfe der in den Thermalbildern enthaltenen Informationsdaten werden die Thermalbilder mit dem dreidimensionalen Modell abgeglichen (7). Mittels der in den Thermalbildern enthaltenen Wärmebilddaten kann ein Vergleich mit den im Modell hinterlegten thermischen Sollwerten an den Messpunkten automatisch und ohne großen Aufwand erfolgen (8).

## Beschreibung

### Technisches Gebiet

Die vorliegende Erfindung betrifft allgemein das Gebiet der Thermografie sowie der visuellen, digitalen Bildverarbeitung. Im Speziellen bezieht sich die vorliegende Erfindung auf ein Verfahren zur thermischen Überwachung eines dreidimensionalen Objektes wie z.B. von Industrieanlagen, Kraftwerksanlagen, etc. und/oder Teilen oder Komponenten dieser Anlagen.

### Stand der Technik

In Industrieanlagen und Kraftwerksanlagen sind Anlagensicherheit und -verfügbarkeit, Arbeitsschutz sowie Prozess- und Produktqualität von besonderer Wichtigkeit. Die Abläufe und Prozesse müssen in vieler Hinsicht ein hohes Maß an Sicherheit und Zuverlässigkeit bieten. Bei vielen Komponenten in Industrieanlagen und Kraftwerksanlagen wie z.B. Motoren, Transformatoren, Pumpen, Turbinen, etc. muss ein durchgehender Betrieb gesichert sein. Insbesondere in Anlagen mit erhöhtem Gefährdungspotential wie z.B. im Bereich von Chemie, Pharmazie, Öl, Gas, etc. oder in Kraftwerken, etc. haben Sicherungsmaßnahmen und ein gesicherter Betrieb eine hohe Priorität. Ausfälle von z.B. wichtigen Anlagekomponenten müssen minimiert und möglichst vermieden werden. Damit ist es wichtig, Defekte und/oder mögliche Ausfälle bereits in einer frühen Phase zu erkennen, um entsprechende Gegenmaßnahmen einleiten zu können.

Dabei kommt einer Überwachung von Temperaturen im Anlagenbereich bzw. von Anlagenkomponenten eine wesentliche Bedeutung zu. Nicht selten werden Defekte thermisch durch eine Erhöhung der Temperatur von Einzelkomponenten angekündigt. Eine zyklische oder laufende Überwachung und Dokumentation von beispielsweise ausfallsgefährdeten Anlagenkomponenten ist damit unumgänglich. Durch eine Überwachung der Temperaturen von Anlagen bzw. Anlagekomponenten können damit z.B. Ausfälle oder Schäden durch Überhitzung, etc. verhindert werden.

Eine Möglichkeit der Temperaturüberwachung stellt eine Integration von einer entsprechenden Sensorik direkt in die Anlage bzw. in die Maschinen/Komponenten der Anlage dar. Aus der Schrift EP 1 363 113 B1 ist dazu beispielsweise eine Vorrichtung zur Temperaturmessung mit Hilfe eines Lichtwellenleiters bekannt. Die Vorrichtung weist dabei eine Sensorleitung mit integrierten Temperaturfühlern - d.h. Lichtwellenleiter und Detektor - sowie einen Auswerteeinheit auf. Für eine Temperaturmessung und -überwachung muss die Sensorleitung allerdings direkt an oder in der zu überwachenden Anlagen oder Anlagenkomponente angebracht werden. Damit ist vor allem die Sensorleitung z.B. Hitze, Verschmutzung, etc. ausgesetzt, welche zu Störungen bei der Temperaturmessung führen können. Weiterhin ist sowohl die Installation als auch die Wartung einer derartigen Temperaturüberwachung mit einem großen Aufwand und mit Kosten verbunden.

Weiterhin besteht die Möglichkeit, eine Anlagen und/oder Anlagenkomponenten z.B. mittels Begehung mit einer Thermal-oder Wärmebildkamera zyklisch mit Hilfe von Thermografie zu überwachen. Die Thermografie ist ein bildgebendes Verfahren zur Anzeige von Oberflächentemperaturen von Objekten und sie kann damit als berührungslose Temperaturmessmethode eingesetzt werden. Bei der Thermografie wird üblicherweise vom physikalischen Prinzip ausgegangen, dass von jedem Körper mit einer Temperatur über dem absoluten Nullpunkt an seiner Oberfläche eine seiner Eigentemperatur proportionale elektromagnetische Strahlung ausgesendet wird. Diese Strahlung kann dann mit einem bildgebenden Gerät - einer Thermal- oder Wärmebildkamera - erfasst werden. Von der Wärmebildkamera wird dabei ähnlich wie von einer herkömmlichen Kamera ein Bild aufgenommen - mit dem Unterschied, dass von der Wärmebildkamera eine Infrarotstrahlung des aufgenommenen Objektes empfangen und aufgezeichnet wird. Die Infrarotstrahlung umfasst eine Wellenlängenbereich von ca. 0,7 µm bis ca. 14 µm. Von der Wärmebild- oder Thermalkamera wird die für das menschliche Auge unsichtbare Infrarotstrahlung in elektrische Signale umgewandelt und daraus ein Wärmebild in so genannten Falschfarben oder gegebenenfalls Grautonstufen erzeugt, welche die jeweilige Oberflächentemperatur bzw. jeweiligen Oberflächentemperaturen eines aufgenommenen Objektes repräsentieren.

Für eine Temperaturüberwachung einer Anlage können beispielsweise zyklisch Begehungen mit einer Wärmebildkamera durchgeführt werden, wobei z.B. die gesamte Anlage, Anlageteile oder kritische Anlagekomponenten als Wärmebilder manuell aufgenommen und ausgewertet werden. Die Anlage oder die jeweiligen Anlagekomponenten können dabei flächig abgebildet werden und es wird eine Übersicht der Temperaturverhältnisse der Anlage oder der Anlagenkomponente erhalten. Die Temperaturmessung mittels Thermografie wird dabei berührungslos z.B. während des laufenden Betriebs der Anlagen bzw. Anlagenkomponente durchgeführt und ohne das Messobjekt durch einen Messsensor zu stören und gegebenenfalls die Temperaturmessung zu verfälschen. Allerdings müssen bei einer Begehung mit einer Wärmebildkamera bzw. bei einer Temperaturüberwachung mittels Thermografie z.B. vor der Begehung die ausfallsgefährdeten Stellen und/oder Komponenten der Anlage manuell lokalisiert und identifiziert werden. Weiterhin muss eine Messung bzw. müssen die Aufnahmen z.B. von einem speziell auf die Anlage geschultem Personal durchgeführt und dann individuell mit jeweiligen thermischen Sollwerten für die jeweilige Anlage bzw. Anlagenkomponente verglichen werden. Weiterhin müssen beispielsweise Prüfberichte, Messdokumentationen, etc. manuell erstellt und gegebenenfalls vom jeweiligen Prüfer in einen z.B. elektronische Datenverwaltung eingegeben werden. Dies führt zu einem hohen Aufwand und großen Kosten für eine derartige Temperaturüberwachung von Anlagen.

### Darstellung der Erfindung

Der Erfindung liegt daher die Aufgabe zugrunde, ein Verfahren zur thermischen Überwachung von dreidimensionalen Objekten (z.B. Industrieanlagen, Kraftwerksanlagen, Anlageteilen, etc.) anzugeben, mit welchem ohne großen Aufwand und automatisch Temperaturwerte von einem zu überwachenden Objektes und/oder von zu überwachenden Objektteilen kontrolliert und dokumentiert werden können.

Die Lösung dieser Aufgabe erfolgt, durch ein Verfahren der eingangs angegebenen Art, bei welchem zuerst ein dreidimensionales Modell eines zu überwachenden Objektes wie z.B. einer Industrieanlage, einer Kraftwerksanlage oder von Anlageteilen, erfasst wird. Dann werden im dreidimensionalen Modell Messpunkte - d.h. als kritische oder gefährdet identifizierte Komponenten, etc. - sowie zugehörige thermische Sollwerte annotiert und weiterhin Überwachungszeitpunkte und zugehörige Überwachungsabläufe festgelegt. Zum jeweiligen Überwachungszeitpunkt wird dann der entsprechende Überwachungsablauf aufgerufen und es werden an durch den jeweiligen Überwachungsablauf vorgegebenen Messpositionen zweidimensionale Thermalbilder der Messpunkte durch eine Überwachungsvorrichtung aufgenommen. Diese Thermalbilder umfassen Wärmebilddaten und zweidimensionale Informations- bzw. Bilddaten im visuellen Spektrum. Von der Überwachungsvorrichtung werden dann die aufgenommenen Thermalbilder an eine zentrale Auswerteeinrichtung weitergeleitet. Dann werden die übermittelten Thermalbilder anhand der in den Thermalbildern enthaltenen zweidimensionalen Informationsdaten ortsrichtig mit dem dreidimensionalen Modell abgeglichen und die in den Thermalbildern enthaltenen Wärmebilddaten mit den im dreidimensionalen Modell hinterlegten thermischen Sollwerten der jeweiligen Messpunkte verglichen.

Ein wesentlicher Hauptaspekt des erfindungsgemäßen Verfahrens besteht darin, dass zu überwachende Objekte (z.B. Industrieanlage, Kraftwerksanlage, Anlagenteile) einmal für das dreidimensionale Modell als Referenz aufgenommen werden müssen. Das dreidimensionale Modell mit den darin annotierten Messpunkten und thermischen Sollwerten kann dann für einen Vielzahl von Überwachungsabläufen für das jeweilige, zu überwachende Objekt als Referenz herangezogen werden. Die Vorrichtungen zum Aufnehmen und Erstellen des dreidimensionalen Modells (z.B. Kamera, Wärmebildkamera, etc.) können ebenfalls für verschiedene, zu überwachende Objekte eingesetzt werden.

Weiterhin ist es durch eine Vorgabe der Messpositionen für die Aufnahme der jeweiligen Thermalbilder der Messpunkte in den Überwachungsabläufen nicht notwendig für das jeweilige Objekt speziell auf das jeweilige Objekt geschultes Personal einzusetzen wie z.B. bei einer Begehung des Objekts für Temperaturüberwachungszwecke. Die Überwachungsvorrichtung kann beispielsweise anhand des Überwachungsablaufs zur jeweiligen Messposition für das Aufnehmen der jeweiligen Thermalbilder navigiert werden. Dazu kann z.B. ein Prüfpersonal mit Hilfe von Lokalisierung der Überwachungsvorrichtung und mittels entsprechender Navigation zur jeweiligen Messposition geführt werden, um die Thermalbilder eines Messpunktes in einer geeigneten Position aufzunehmen. Es ist aber auch denkbar, dass beispielsweise die Überwachungsvorrichtung automatisiert z.B. mittels Roboter, Drohne, etc. für die Thermalbilderaufnahmen der Messpunkte an die jeweilige Messposition gesteuert wird.

Das erfindungsgemäße Verfahren bietet auch den Vorteil, dass ein Vergleich von im dreidimensionalen Modell annotierten thermischen Sollwerten mit Istwerten an den Messpunkten aus den Thermalbildern, welche während eines Überwachungsablaufes aufgenommen wurden, automatisiert erfolgt. Weiterhin kann mit Hilfe des dreidimensionalen Modells und den Thermalbildern aus dem jeweiligen Überwachungsablauf von der zentralen Auswerteeinrichtung sehr einfach und automatisch kontrolliert werden, ob alle Messpunkte korrekt und vollständig erfasst worden sind. Die aus dem Thermalbildern abgeleiteten Messwerte können dann beispielsweise in der zentralen Auswerteeinheit entsprechend abgelegt werden. Von der zentralen Auswerteeinheit kann dann sehr einfach und automatisch bestimmt werden, ob und wann die jeweiligen Messpunkte erfasst worden sind.

Bei einer zweckmäßigen Weiterbildung des erfindungsgemäßen Verfahrens ist vorgesehen, dass von der zentralen Auswerteeinrichtung automatisch auf Basis des Vergleichs der Wärmebilddaten aus den aufgenommenen Thermalbildern mit den im dreidimensionalen Modell hinterlegten Sollwerten ein Prüfbericht erstellt wird. Auf diese Weise können sehr einfach und rasch für die jeweiligen Überwachungsabläufe Prüfberichte oder Prüfprotokolle erstellt werden. Diese Prüfberichte bzw. -protokolle können dann z.B. mittels eines Triggers (z.B. ein gemessener Istwert übersteigt einen vordefinierten Schwellwert, etc.) an ein so genanntes Issue-Ticketing-System weitergeleitet werden. In einem Issue-Ticketing-System können beispielsweise Störungen, Fehler, etc. erfasst und für eine Behebung an Bearbeiter verteilt und zugeordnet werden. Auf diese Weise können z.B. sich ankündigende Defekte bei einem Objekt wie z.B. einer Komponente einer Industrieanlage, einer Kraftwerksanlage oder eines Anlageteils rasch erkannt und frühzeitig behoben werden.

Es ist weiterhin vorteilhaft, wenn auf Basis des Abgleichs der in den Thermalbildern enthaltenen Informationsdaten mit dem dreidimensionalen Modells eine Rückmeldung über eine korrekte Erfassung des jeweiligen Messpunktes an die Überwachungsvorrichtung gesendet wird. Auf diese Weise kann sehr rasch nach einer Messung bzw. einer Aufnahme eines Messpunktes mit der Überwachungsvorrichtung festgestellt werden, ob ein Messpunkt korrekt und erfolgreich erfasst worden ist. Bei einer nicht korrekten Erfassung eines Messpunktes kann die Messung ohne großen Aufwand wiederholt werden, wobei die Überwachungsvorrichtung beispielsweise nochmals zur entsprechenden Messposition navigiert wird, um ortsrichtige Thermalbildaufnahmen des jeweiligen Messpunktes zu erhalten. Entsprechende Anweisung für eine neuerliche Messung bzw. Thermalbildaufnahme können beispielsweise in der Rückmeldung enthalten sein.

Es ist auch günstig, wenn bei der Überwachungsvorrichtung zumindest eine Vorrichtung zum Erfassen von Thermalbildern wie z.B. eine Wärmebildkamera, eine Vorrichtung zum Bestimmen einer aktuellen Position und zum Vergleichen mit einer vorgegebenen Messposition und eine Vorrichtung zum Empfangen des jeweiligen Überwachungsablaufs vorgesehen werden. Durch diese in der Überwachungsvorrichtung zumindest vorgesehenen Vorrichtungen können auf einfache und kostensparende Weise ein Überwachungsablauf aufgerufen, die entsprechend darin angeführten Messpositionen angesteuert und die Thermalbilder der zu überwachenden Messpunkte aufgenommen und gegebenenfalls an die zentrale Auswertevorrichtung weitergeleitet werden. Die Überwachungsvorrichtung kann dabei aus einer Anordnung von einzelnen, getrennten Vorrichtungen wie eine Wärmebildkamera zum Erfassen von Thermalbildern, einer Vorrichtung zum Bestimmen einer aktuellen Position der Überwachungsvorrichtung und zum Vergleichen mit der vorgegebenen Messposition sowie eine Empfangseinheit zum Empfangen des jeweiligen Überwachungsablaufs, von welchem die jeweiligen Messpositionen vorgegeben werden, bestehen, von welcher eine Einheit gebildet wird. Es besteht aber auch die Möglichkeit, dass die Vorrichtungen bzw. Funktionalitäten dieser Vorrichtungen (z.B. Wärmebildkamera, Positionsbestimmung und Vergleich mit einer Messposition, Empfangsgerät) in einer einheitlichen, festverbundenen Vorrichtung untergebracht sind.

Idealerweise wird das dreidimensionale Modell des zu überwachenden Objektes mittels Laserscanning bzw. -abtastung, Rekonstruktion aus überlappenden zweidimensionalen Bildaufnahmen oder mit Hilfe von Abtastung mit strukturiertem Licht oder Lichtschnittverfahren erfasst und erstellt. Durch diese Methoden kann auf einfache Weise ein dreidimensionales Modell des jeweils zu überwachenden Objektes erstellt werden. Beim Laserscanning wird eine Oberfläche des Objektes zeilen- oder rasterartig von einem Laserstrahl überstrichen, um ein Bild zu erzeugen, in welchen neben der Oberflächenstruktur auch Intensitätswerte des von den aufgenommenen Oberflächen reflektierten Laserlichtes z.B. in Graustufen angegebenen sind. Bei der Rekonstruktion des dreidimensionalen Modells aus überlappenden, zweidimensionalen Bildaufnahmen wie z.B. mittels Structure from Motion, Stereomesskopf, etc. wird das dreidimensionale Modell z.B. aus einer Sequenz zweidimensionaler Bildaufnahmen abgeschätzt, welche z.B. durch den Überlapp gekoppelt sind.

Bei der Abtastung mit strukturiertem Licht bzw. Lichtschnittverfahren wird die Vermessung der Objektoberfläche z.B. entlang einer projizierten Lichtlinie durchgeführt. Dieses Verfahren basiert auf dem Prinzip der Triangulation. Dabei wird ein Lichtschnittsensor eingesetzt, welcher aus einem Lichtprojektor (z.B. Laser als Lichtquelle), von welchem eine möglichst schmale und helle Linie auf das Objekt projiziert wird, und einer elektronischen Kamera, von welcher die Projekt der Linie auf dem Objekt beobachtet wird, besteht. Aus der Verschiebung der Linie im Kamerabild wird dann z.B. Methoden der Photogrammetrie in dreidimensionale Koordinaten umgerechnet.

Eine weitere Methode, um ein dreidimensionales Modell eines Objektes zu erhalten, ist die so genannte Time-of-Flight-Methode (TOF). Dabei werden mit so genannten TOF-Kameras, 3D-Kamerasysteme, mit einem Laufzeitverfahren Distanzen gemessen. Dazu wird beispielsweise einen Szene bzw. ein Objekt mittels eines Lichtimpulses ausgeleuchtet und von der Kamera für jeden Bildpunkt die Zeit gemessen, welche das Licht bis zum Objekt und wieder zurück braucht. Die benötigte Zeit ist direkt proportional zur Distanz und von der Kamera wird somit für jeden Bildpunkt eine Entfernung eines abgebildeten Punktes des Objektes geliefert. Das Prinzip von TOF ist dem Laserscanning sehr ähnlich, weist aber den Vorteil auf, dass ein ganze Szene bzw. ein Objekt auf einmal aufgenommen werden kann, da nicht mit einem Laserstrahl abgetastet werden muss, und damit sehr rasch ein 3D-Modell erhalten wird.

Üblicherweise wird bei den eingesetzten Methoden (z.B. Laserscanning, Rekonstruktion aus überlappenden Bildern, Lichtschnittverfahren) neben einer Geometrie eines Objektes auch eine Radiometrie (z.B. Grauwerte oder RGB-Werte) des Objektes miterfasst. Durch diese Informationen werden dann z.B. besonders genaue Verfahren der Lokalisierung unterstützt - d.h. die während eines Überwachungsablaufes aufgenommenen Thermalbilder können einfacher und besser auf ihre Ortsrichtigkeit mit dem dreidimensionalen Modell abgeglichen werden.

Eine zweckmäßige Ausgestaltung der Erfindung sieht auch vor, dass das dreidimensionale Modell, dazu festgelegte Überwachungsabläufe, aufgenommene, zugehörige Thermalbilder sowie zugehörige Prüfberichte in einer zentralen Datenbank erfasst und abgelegt werden. Dadurch können die bei Überwachungsabläufen gemessenen Daten sowie zugehörige Prüfberichte auf einfache Weise abgerufen und ausgewertet werden. Es ist z.B. möglich, aufgenommenen Daten mit Ortsbezug d.h. aufgenommene Thermalaufnahmen von Messpunkten über verschiedene, notwendige Prüfzeitpunkte für einen relevanten Bereich abzurufen. Diese Daten können dann z.B. entsprechend dargestellt und angezeigt werden, um so beispielsweise Veränderungen der Temperatur eines relevanten Bereichs des zu überwachenden Objektes aufzuzeigen.

Vorteilhafter Weise kann das dreidimensionale Modell in Kombination mit den aufgenommenen Thermalbildern und den zugehörigen Prüfberichten mit Hilfe von so genannten Augmented Reality-Methoden visualisiert werden. Durch einen Einsatz von Augmented Reality können die entsprechenden Daten beispielsweise interaktiv visualisiert werden. Methoden der Augmented Reality ermöglichen eine computergestützte Erweiterung der Realitätswahrnehmung. Informationen wie z.B. die mittels Thermalbildern festgestellten Istwerte an den Messpunkten des Objektes können dabei visuell z.B. mit dem dreidimensionalen Modell unterlegt dargestellt und mit computergenerierten Zusatzinformationen (z.B. Informationen aus dem Prüfbericht, etc.) ergänzt werden. Sich ankündigende Defekte, Störungen in der Temperatur, etc. bei einem Objekt werden damit visuell dargestellt und können dann rasch und einfach gefunden werden.

### Kurzbeschreibung der Zeichnung

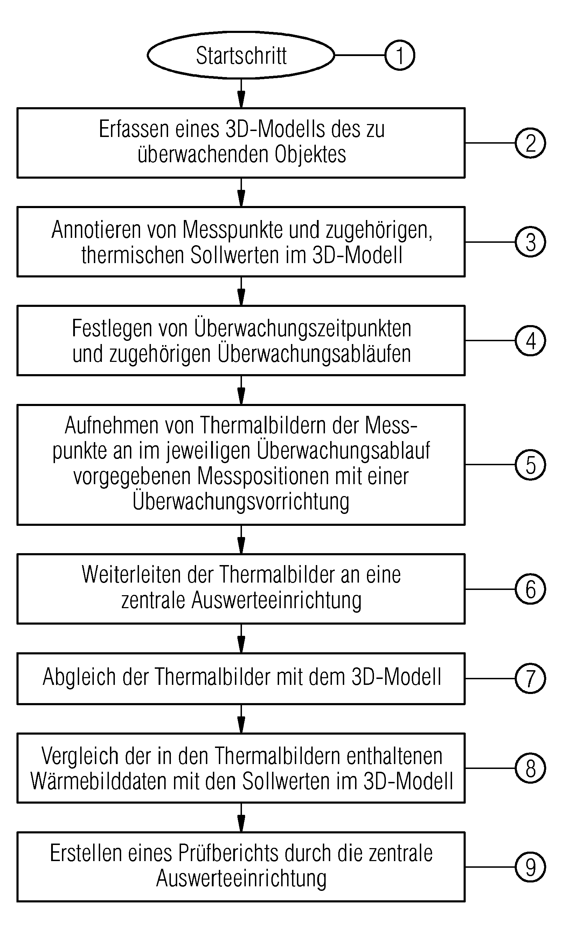

Die Erfindung wird nachfolgend schematisch in beispielhafter Weise anhand der beigefügten Figur erläutert. Figur 1 zeigt dabei schematisch einen beispielhaften Ablauf des erfindungsgemäßen Verfahrens zur thermalen Überwachung von dreidimensionalen Objekten.

### Ausführung der Erfindung

Figur 1 zeigt in schematischer Weise einen beispielhaften Ablauf des erfindungsgemäßen Verfahrens zur thermalen Überwachung eines dreidimensionalen Objektes wie z.B. einer Industrieanlage, einer Kraftwerksanlagen, etc. bzw. von Komponenten derartiger Anlagen wie z.B. Motoren, Transformatoren, Pumpen, etc. Das erfindungsgemäße Verfahren beginnt mit einem Startschritt 1. In einem zweiten Verfahrensschritt 2 wird ein dreidimensionales Modell (3D-Modell) eines zu überwachenden, dreidimensionalen Objektes wie z.B. einer Industrieanlage, Kraftwerksanlage oder eines Anlagenteils erfasst. Das 3D-Modell bietet als Referenzmodell abhängig von der verwendeten Modalität, eine Möglichkeit einer genauen Lokalisierung von z.B. während eines Überwachungsablaufs oder einer Inspektion aufgenommenen Bildmaterials (z.B. über Korrespondenzsuche oder Optimierung eines Geometrie-bezogenen Distanzmaßes.

Zum Erfassen des 3D-Modells im zweiten Verfahrensschritt 2 können unterschiedliche Methoden wie z.B. das so genannte Laserscanning, eine Rekonstruktion aus überlappenden zweidimensionalen Bildern (z.B. Structure from Motion, Aufnahmen mittels Multi-View-Stereo-Prinzip) oder eine Abtastung mit strukturiertem Licht bzw. das so genannte Lichtschnittverfahren eingesetzt werden. Weiterhin kann bei komplexen Objekten bzw. Anlagen vorgesehen werden, dass anstatt eines holistischen Modells mehrere Teilmodelle erfasst werden. Die Anzahl sowie die Erfassung der Teilmodelle (d.h. von welchen Objekt- bzw. Anlagenteile ein eigenes Teilmodell gebildet wird) können beispielsweise anhand von vorgesehenen Inspektionsaufgaben definiert werden. Wird ein Objekt anhand von mehreren Teilmodellen erfasst, so ist es notwendig, die Teilmodelle zu georeferenzieren - d.h. die Teilmodelle in Bezug zu einem gemeinsamen und bekannten Weltkoordinatensystem ortsrichtig zu platzieren. Zusätzlich zur Geometrie des Objektes wird im 3D-Modell auch die Radiometrie - d.h. RGB-Farbwerte oder Graustufen. Durch diese Information kann z.B. eine Lokalisierung noch genauer ausgeführt werden.

In einem dritten Verfahrensschritt 3 werden dann in das 3D-Modell des zu überwachenden Objektes bzw. in die Teilmodelle des zu überwachenden Objektes einmalig alle zu untersuchenden Messpunkte annotiert. Zu den Messpunkten werden im 3D-Modell auch die entsprechenden thermischen Sollwerte der Messpunkte sowie entsprechende Prüfintervalle für die jeweiligen Messpunkte z.B. in Form von Metadaten hinterlegt. Das Annotieren der Messpunkte und entsprechenden Sollwerte kann dabei z.B. manuell oder automatisiert durch Aufnahmen des Objektes bzw. der jeweiligen Objektteile bzw. Messpunkte bei einer Soll-Thermalcharakteristik erfolgen, wobei als Aufnahmen beispielsweise Thermalbilder als mit Wärmebilddaten und zweidimensionaler Information verwendet werden können. Eine auf diese Weise ermittelte Datenbasis - d.h. dreidimensionales Objektmodell mit Messpunkten und thermischen Sollwerten - kann z.B. in einer zentralen Datenbank abgelegt werden. Die Datenbasis steht damit mehreren Überwachungsabläufen bzw. Inspektionen zur Verfügung und kann damit immer wieder verwendet werden.

In einem vierten Verfahrensschritt 4 werden dann auf Basis des dreidimensionalen Modells, der annotierten Messpunkte und der zugehörigen Prüfintervalle Überwachungs- bzw. Inspektionspläne mit Überwachungszeitpunkten für das zu überwachende Objekt oder spezielle Messpunkte des Objekts erstellt. Durch einen Überwachungs- bzw. Inspektionsplan werden beispielsweise für die jeweiligen Messpunkte Überwachungszeitpunkte festgelegt und es können daraus Überwachungsabläufe abgeleitet werden. Diese Überwachungsabläufe enthalten beispielsweise alles zu einem bestimmten Überwachungszeitpunkt zu überprüfenden Messpunkte eines Objektes mit Ortsbezug sowie eine Abfolge der Messpunkte, welche zu diesem Überwachungszeitpunkt von einer Überwachungsvorrichtung erfasst werden müssen.

In einem fünften Verfahrensschritt 5 wird zu einem Überwachungszeitpunkt ein entsprechender Überwachungsablauf abgerufen. Der Überwachungsablauf kann dabei z.B. in die Überwachungsvorrichtung geladen werden. Anhand des Überwachungsablaufs wird dann die Überwachungsvorrichtung zu den jeweils zu überprüfenden Messpunkten des zu überwachenden Objektes bzw. zu den zugehörigen Messpositionen navigiert - d.h. die Überwachungsvorrichtung wird z.B. mit Hilfe von Navigation von Prüfpersonal zu den jeweiligen Messpositionen gebracht oder die Überwachungsvorrichtung wird beispielsweise automatisiert durch einen Roboter, einen Drohne, etc. an die jeweiligen Messpositionen gesteuert. Die Navigation zur jeweiligen Messposition kann dabei z.B. mittels eines differentiellen Navigationssystems (z.B. differentielles Global Positioning System (GPS)), mittels bildbasierter oder funkbasierter Navigation durchgeführt werden. Bei der Überwachungsvorrichtung sind dazu zumindest eine Vorrichtung zum Empfangen des jeweiligen Überwachungsablaufs sowie eine Vorrichtung zum Bestimmen einer aktuellen Position und zum Vergleichen mit der jeweiligen, im Überwachungsablauf definierten Messposition (z.B. für Navigationshinweise, Visualisierung von aktueller Position und anzusteuernder Messposition, etc.) vorgesehen. Weiterhin umfasst die Überwachungsvorrichtung eine Vorrichtung zum Erfassen von Thermalbildern, von welchen Wärmebilddaten und zweidimensionales Bildinformationendaten im visuellen Spektrum umfasst werden. Diese Vorrichtungen können als eigene, getrennte Geräte ausgeführt sein, von welchen zusammen die Überwachungsvorrichtung gebildet wird, oder die Vorrichtungen bzw. ihre Funktionalitäten können auch integriert in einem Gerät vorliegen. Weiterhin ist es beispielsweise möglich, dass die Überwachungsvorrichtung in Relation zum 3D-Modell des Objektes bzw. der zu überwachenden Anlage lokalisiert wird. Dazu ist jedoch eine durchgängige Dokumentation des Objektes und seiner Umgebung in 3D notwendig.

Nachdem die jeweilige, im Überwachungsablauf vorgegebene Messposition für einen Messpunkt annavigiert worden ist, wird im fünften Verfahrensschritt 5 von der Überwachungsvorrichtung zumindest ein Thermalbild vom zur jeweiligen Messposition gehörenden Messpunkt aufgenommen. Im sechsten Verfahrensschritt 6 werden dann die aufgenommenen Thermalbilder von der Überwachungsvorrichtung an eine zentrale Auswerteeinrichtung weitergeleitet. Von der zentralen Auswerteeinrichtung werden dann die übermittelten Thermalbilder automatisch ausgewertet.

Dabei werden in einem siebenten Verfahrensschritt 7 die Thermalbilder vom zentralen Auswertesystem hochgenau in das hinterlegte 3D-Modell des zu überwachenden Objektes registriert. D.h. die aufgenommenen Thermalbilder werden durch ein kalibriertes Set-Up der Vorrichtung zum Erfassen von Thermalbildern (z.B. Wärmebildkamera) ortsrichtig abgeglichen und im 3D-Modell registriert. Das kalibrierte Set-Up wird durch das Annavigieren der vorgegebenen Messpositionen mit Hilfe des jeweiligen Überwachungsablaufes erzielt, in welchem Anweisung für ein Einstellen einer geeigneten Position für die Thermalbildaufnahmen enthalten sein können. Die ortsrichtige Registrierung erfolgt hinsichtlich der Position der Vorrichtung zum Erfassen der Thermalbilder zum Aufnahmezeitpunkt als auch der Blickrichtung und des Beobachtungsfeldes - diese können beispielsweise als Messposition und als Anweisungen zur Einnahme einer geeigneten Aufnahmeposition im jeweiligen Überwachungsablauf für den jeweiligen Messpunkt vorgegeben werden.

Der Abgleich im siebenten Verfahrensschritt 7 wird anhand der in den Thermalbildern enthaltenen zweidimensionalen Informationsdaten im visuellen Spektrum (RGB-Bilddaten) durchgeführt. Wird dabei von der Auswerteeinrichtung einen Geo-Referenzierung für diese Informationsdaten im 3D-Modell hergestellt, so gilt diese Geo-Referenzierung auch ortsrichtig für die zugehörigen Wärmebilddaten. D.h. es kann für jeden Pixel der aufgenommenen Thermalbilder eine korrespondierende Position im 3D-Modell bzw. den 3D-Referenzdaten zugeordnet werden. Damit kann für jeden im 3D-Modell annotierten Messpunkt aus den aufgenommenen Thermalbildern bzw. aus den darin enthaltenen Wärmebilddaten ein thermaler Ist-Wert abgeleitet werden. In einem achten Verfahrensschritt 8 kann dann in der zentralen Auswerteeinrichtung automatisch der aus den jeweiligen Wärmebilddaten abgeleitete Ist-Wert eines Messpunktes mit dem thermalen, im 3D-Modell hinterlegten Soll-Wert für diesen Messpunkt verglichen werden.

Durch den ortsrichtigen Abgleich der in den Thermalbildern enthaltenen Informationsdaten (RGB-Bilddaten) mit dem dreidimensionalen Modell kann beispielsweise festgestellt werden, ob ein Messpunkt korrekt erfasst worden ist - d.h. eine Thermalaufnahme von der richtigen Position aus erfolgt ist. Es kann dann von der zentralen Auswerteeinrichtung eine entsprechende Rückmeldung an die Überwachungsvorrichtung gesendet werden. Wurde ein Messpunkt nicht korrekt erfasst (d.h. es ist z.B. keine Geo-Referenzierung zwischen dem zumindest einen Thermalbild des Messpunktes und dem 3D-Modell möglich), so kann ebenfalls eine entsprechende Rückmeldung an die Überwachungsvorrichtung gesendet werden. Die Thermalaufnahme für diesen Messpunkt kann dann beispielsweise mit einer verbesserten Ansteuerung dieses Messpunktes wiederholt werden. Weiterhin kann im siebenten Verfahrensschritt 7 durch den Abgleich sehr einfach automatisiert kontrolliert werden, ob alle Messpunkte des durchgeführten Überwachungsablaufs vollständig erfasst worden sind.

In einem neunten Verfahrensschritt 9 kann dann von der zentralen Auswerteeinrichtung automatisiert ein Prüfbericht erstellt werden. Dieser Prüfbericht kann auf Basis des Vergleichs der aus den jeweiligen Wärmebilddaten der Thermalbilder abgeleiteten thermischen Ist-Werten mit den Sollwerten aus dem 3D-Modell erstellt werden. Die Prüfberichte können dann z.B. mittels eines Triggers (z.B. ein gemessener Istwert übersteigt einen vordefinierten Schwellwert, etc.) an ein so genanntes Issue-Ticketing-System weitergeleitet werden, in welchem z.B. Störungen, Fehler, etc. erfasst und für eine Behebung an Bearbeiter verteilt werden.

Erstellte Prüfberichte sowie aufgenommene Thermalbilder können ebenfalls wie das 3D-Modell mit den Sollwerten und Überwachungsabläufen in der zentralen Datenbank abgelegt werden. Damit können dann aufgenommene Daten mit Ortsbezug z.B. für verschiedene Überwachungszeitpunkte ausgewertet und angezeigt werden. Weiterhin kann das dreidimensionale Modell in Kombination mit den erfassten Daten wie den Thermalbildern, etc. und den abgeleiteten Prüfberichten mit Hilfe von Augmented Reality-Methoden interaktiv visualisiert werden.

## Patentansprüche

1. Verfahren zur thermischen Überwachung von dreidimensionalen Objekten, insbesondere Industrieanlagen, Kraftwerksanlagen und/oder Anlagenteilen, mit folgenden Verfahrensschritten:
- Erfassen eines dreidimensionalen Modells eines zu überwachenden Objektes (2),
- Annotieren von Messpunkten und thermischen Sollwerten im dreidimensionalen Modell (3),
- Festlegen von Überwachungszeitpunkten und zugehörigen Überwachungsabläufen (4),
- Aufnehmen von zweidimensionalen Thermalbildern der Messpunkte an in einem jeweiligen Überwachungsablauf vorgegebenen Messpositionen durch eine Überwachungsvorrichtung, wobei die Thermalbilder Wärmebilddaten und zweidimensionale Informationsdaten im visuellen Spektrum umfassen (5),
- Weiterleiten der aufgenommenen Thermalbilder an eine zentrale Auswerteeinrichtung durch die Überwachungsvorrichtung (6),
- Abgleichen der übermittelten Thermalbilder mit dem dreidimensionalen Modell mit Hilfe der in den Thermalbildern enthaltenen Informationsdaten (7),
- und Vergleichen der in den Thermalbilder enthaltenen Wärmebilddaten mit den im dreidimensionalen Modell hinterlegten Sollwerten an den jeweiligen Messpunkten (8).

2. Verfahren nach Anspruch 1, **dadurch gekennzeichnet, dass** von der zentralen Auswerteeinrichtung automatisch auf Basis des Vergleichs der Wärmebilddaten aus den aufgenommenen Thermalbildern mit den im dreidimensionalen Modell hinterlegten Sollwerten ein Prüfbericht abgeleitet wird (9).

3. Verfahren nach einem der Ansprüche 1 bis 2, **dadurch gekennzeichnet, dass** auf Basis des Abgleichs der in den Thermalbildern enthaltenen Informationsdaten mit dem dreidimensionalen Modell eine Rückmeldung über eine korrekte Erfassung des jeweiligen Messpunktes an die Überwachungsvorrichtung gesendet wird (7, 8).

4. Verfahren nach einem der Ansprüche 1 bis 3, **dadurch gekennzeichnet, dass** bei der Überwachungsvorrichtung zumindest eine Vorrichtung zum Erfassen von Thermalbildern, eine Vorrichtung zum Bestimmen einer aktuellen Position und zum Vergleichen mit vorgegebenen Messpositionen sowie eine Vorrichtung zum Empfangen des jeweiligen Überwachungsablaufs vorgesehen werden.

5. Verfahren nach einem der Ansprüche 1 bis 4, **dadurch gekennzeichnet, dass** das Erfassen des dreidimensionalen Modells mittels Laserscanning, Rekonstruktion aus überlappenden zweidimensionalen Bildaufnahmen, mittels Abtastung mit strukturiertem Licht oder Lichtschnittverfahren oder der so genannten Time-of-Flight-Methode durchgeführt wird (2).

6. Verfahren nach einem der Ansprüche 1 bis 5, **dadurch gekennzeichnet, dass** das dreidimensionale Modell, zugehörige Überwachungsabläufe, aufgenommene Thermalbilder und zugehörige Prüfberichte in einer zentralen Datenbank erfasst und abgelegt werden.

7. Verfahren nach einem der Ansprüche 1 bis 6, **dadurch gekennzeichnet, dass** das dreidimensionale Modell in Kombination mit den aufgenommenen Thermalbildern und den zugehörigen Prüfberichten mit Hilfe von so genannten Augmented Reality-Methoden visualisiert wird (9).
